# DEMANDE DE BREVET EUROPEEN

(11) **EP 0 971 467 A1**
(43) Date de publication de la demande: **12.01.2000**
(21) Numéro de dépôt: 99401625.1
(22) Date de dépôt: 30.06.1999
(51) Int. Cl.: H02G 3/12

(54) **Boîte d'encastrement pour cloison sèche à patte(s) de serrage initialement d'un seul tenant, notamment pour appareillage électrique**

(30) Priorité: 08.07.1998 FR 9808749
(71) Demandeur: LEGRAND, F-87000 Limoges (FR); LEGRAND SNC, F-87000 Limoges (FR)
(72) Inventeur: Costes, Jean-Christophe, 87570 Rilhac Rancon (FR)
(74) Mandataire: CABINET BONNET-THIRION

(57) **Abrégé**

II s'agit d'une boîte d'encastrement du genre comportant, d'une part, une paroi latérale (11), qui présente, transversalement, en saillie vers l'extérieur, un épaulement (12), et, d'autre part, au moins une patte de serrage (13), qui, disposée au droit d'un évidement (14) de la paroi latérale (11), est portée par une languette (15) et est susceptible d'être commandée en déplacement en direction de l'épaulement (12) de cette paroi latérale (11).

Suivant l'invention, et conjointement, la patte de serrage (13), qui, en service, est en prise avec une vis de commande propre à sa commande en déplacement, est reliée par une zone sécable à la languette (15) qui la porte, et la dimension transversale (D1) de cette languette (15) est sensiblement de l'ordre de celle (D2) de l'évidement (14) de la paroi latérale (11), pour une occultation au moins partielle de cet évidement (14).

Application, notamment, aux boîtes d'encastrement pour appareillages électriques.

## Description

La présente invention concerne d'une manière générale les boîtes d'encastrement du type de celles mises en oeuvre pour encastrer un quelconque appareillage, et, par exemple, un quelconque appareillage électrique, dans une cloison sèche.

Ainsi qu'on le sait, une cloison sèche est une cloison qui, réalisée à sec à partir d'éléments préfabriqués, comporte, usuellement, à l'avant, une paroi de façade plus ou moins mince, et l'assujettissement d'une boîte d'encastrement dans une ouverture ménagée à cet effet dans cette paroi de façade se fait usuellement par pincement de cette dernière.

Pour ce pincement, les boîtes d'encastrement présentent, d'une part, transversalement, en saillie vers l'extérieur, sur leur paroi latérale, sur une partie au moins du pourtour de celle-ci, un épaulement, qui est destiné à venir porter sur la surface externe de la paroi de façade à pincer, et, d'autre part, au moins une patte de serrage, qui, sous le contrôle de moyens de commande, est susceptible d'être commandée en déplacement en direction de l'épaulement de la paroi latérale, et qui est ainsi destinée, elle, à venir porter sur la surface interne de la paroi de façade à pincer, pour le serrage de celle-ci en coopération avec cet épaulement.

La présente invention vise plus particulièrement le cas où, tant pour son déplacement en hauteur le long de la paroi latérale de la boîte d'encastrement que pour son escamotage initial dans le volume intérieur de cette boîte d'encastrement, une telle patte de serrage est disposée au droit d'un évidement de la paroi latérale allongé suivant une génératrice de celle-ci.

Le plus souvent, deux pattes de serrage sont prévues, en positions diamétralement opposées l'une par rapport à l'autre, et leurs moyens de commande sont des vis métalliques.

Le plus souvent, également, ces pattes de serrage forment des pièces distinctes de la boîte d'encastrement.

Pour une simplification des fabrications, et, ainsi, une diminution des coûts, il a cependant été envisagé de les faire venir d'un seul tenant de cette boîte d'encastrement.

Plus précisément, il a été envisagé de les faire porter chacune par une languette, qui est apte à en constituer les moyens de commande, en intervenant alors à la manière d'une tirette, au lieu et place de la vis de commande usuellement prévue à cet effet, et qui est elle-même initialement d'un seul tenant avec la boîte d'encastrement, tout en étant susceptible d'être désolidarisée de celle-ci.

Cette disposition, qui a donné et peut encore donner satisfaction, a pour inconvénient que, au fur et à mesure que chacune des pattes de serrage est commandée en déplacement en direction de l'épaulement de la paroi latérale, l'évidement de la paroi latérale dans lequel elle se débat en hauteur se trouve progressivement découvert.

Pour certaines applications, au moins, les évidements ainsi laissés ouverts par les pattes de serrage à la base de la paroi latérale de la boîte d'encastrement peuvent être à l'origine de difficultés, en permettant, par exemple, une pénétration intempestive de quelconques déchets ou débris dans cette boîte d'encastrement.

La présente invention a d'une manière générale pour objet une disposition permettant d'éviter cet inconvénient.

De manière plus précise, elle a pour objet une boîte d'encastrement du genre comportant, d'une part, une paroi latérale, qui présente, transversalement, en saillie vers l'extérieur, sur une partie au moins de son pourtour, un épaulement, et, d'autre part, au moins une patte de serrage, qui, disposée au droit d'un évidement de la paroi latérale allongé suivant une génératrice de celle-ci, est portée par une languette et est susceptible d'être commandée en déplacement en direction de l'épaulement de cette paroi latérale, pour coopération en serrage avec celui-ci, cette boîte d'encastrement étant d'une manière générale caractérisée, conjointement, en ce que, d'une part, la patte de serrage, qui est en prise avec une vis commande propre à sa commande en déplacement, est reliée par une zone sécable à la languette qui la porte, et en ce que, d'autre part, la dimension transversale de cette languette est sensiblement de l'ordre de celle de l'évidement correspondant de la paroi latérale, pour une occultation au moins partielle de cet évidement.

Autrement dit, suivant l'invention, au lieu de tirer parti de la languette portant la patte de serrage pour assurer la commande en déplacement de celle-ci, il est tiré parti de cette languette pour assurer l'occultation de l'évidement de la paroi latérale dans lequel se débat cette patte de serrage.

Il est ainsi trouvé un compromis particulièrement avantageux entre une réalisation d'un seul tenant de l'ensemble et la conservation d'une certaine étanchéité pour la boîte d'encastrement.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une boîte d'encastrement suivant l'invention ;
la figure 2 reprend, à échelle supérieure, le détail de la figure 1 repéré par un encart Il sur cette figure 1 ;
la figure 3 reprend, à échelle encore supérieure, le détail de la figure 2 repéré par un encart III sur cette figure 2 ;
les figures 4, 5 et 6 sont, à échelle différente, des vues partielles en coupe de cette boîte d'encastrement, suivant, chacune respectivement, les lignes IV-IV, V-V et VI-VI de la figure 2 ;
les figures 7A et 7B sont des vues partielles en perspective, qui, déduites de celle de la figure 1, illustrent chacune respectivement deux phases successives de la mise en configuration d'attente de la boîte d'encastrement suivant l'invention après le moulage de celle-ci ;
la figure 8 est, à échelle supérieure, une vue partielle en coupe de cette boîte d'encastrement, suivant la ligne VIII-VIII de la figure 7B ;
la figure 9 est une vue partielle en perspective qui, déduite elle aussi de celle de la figure 1, illustre le passage de la boîte d'encastrement suivant l'invention de sa configuration d'attente à sa configuration de service ;
la figure 10 est, à l'échelle de la figure 8, une vue partielle en coupe de cette boîte d'encastrement, suivant la ligne X-X de la figure 9.

Tel qu'illustré sur ces figures, et de manière connue en soi, la boîte d'encastrement 10 suivant l'invention comporte, globalement, d'une part, une paroi latérale 11, qui présente, transversalement, en saillie vers l'extérieur, sur une partie au moins de son pourtour, un épaulement 12, et, d'autre part, au moins une patte de serrage 13, qui, disposée au droit d'un évidement 14 de la paroi latérale 11 allongé suivant une génératrice de celle-ci, est portée par une languette 15 et est susceptible, suivant des modalités décrites plus en détail ultérieurement, d'être commandée en déplacement en direction de l'épaulement 12 de cette paroi latérale 11, pour coopération en serrage avec celui-ci.

En pratique, et tel que représenté, la boîte d'encastrement 10 comporte également un fond 16, qui, s'étendant sensiblement transversalement par rapport à la paroi latérale 11, la ferme au moins partiellement à l'extrémité inférieure de celle-ci.

Dans la forme de réalisation représentée, la paroi latérale 11 a, en section transversale, un contour sensiblement circulaire, mais, en pratique, ce contour est indifférent.

Dans la forme de réalisation représentée, l'épaulement 12 appartient à une collerette 18 qui s'étend sur la totalité, ou la quasi totalité, du pourtour de la paroi latérale 11, à la partie supérieure de cette paroi latérale 11, et, en pratique, à niveau avec son débouché 19.

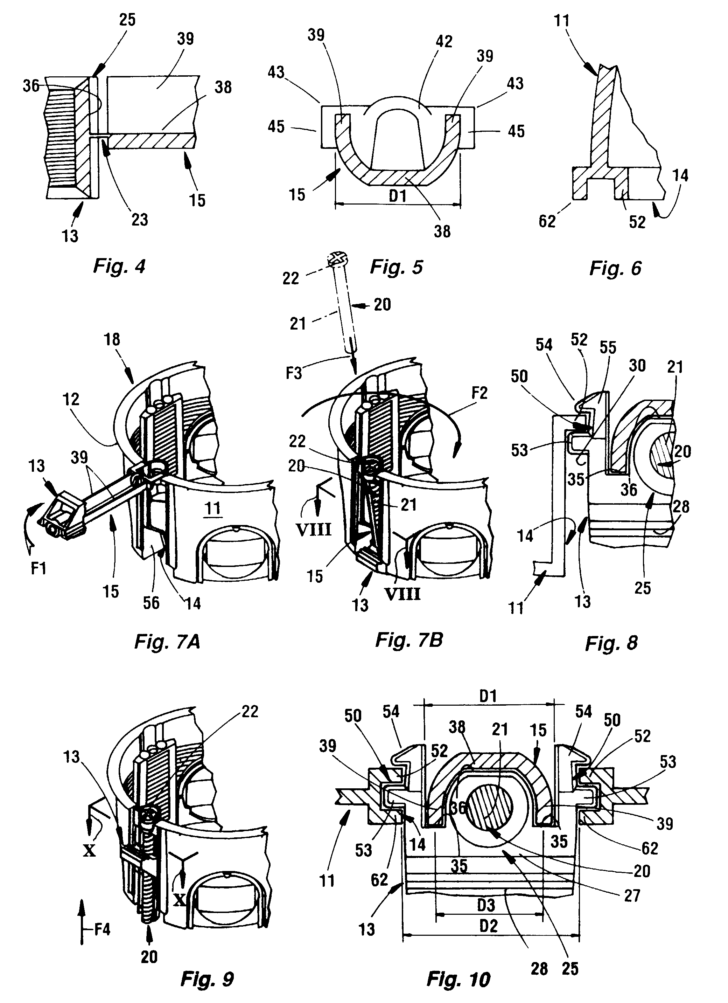

Suivant l'invention, et conjointement, d'une part, la patte de serrage 13, qui, pour la configuration de service de la boîte d'encastrement 10, et tel que représenté sur les figures 7B, 8, 9 et 10, est en prise avec une vis de commande 20, à fût 21 et tête 22, propre à sa commande en déplacement, est reliée, ainsi qu'il est mieux visible sur la figure 4, par une zone sécable 23, à la languette 15 qui la porte, et, d'autre part, la dimension transversale D1 de cette languette 15, mesurée hors tout extérieurement, est sensiblement de l'ordre de celle D2 de l'évidement 14 correspondant de la paroi latérale 11, pour une occultation au moins partielle de cet évidement 14, tout en étant en pratique légèrement inférieure à cette dimension transversale D2.

En pratique, et de manière connue en soi, deux pattes de serrage 13 sont prévues, en positions diamétralement opposées l'une par rapport à l'autre, avec, pour chacune d'elles, un évidement 14 dans la paroi latérale 11, une languette 15, une vis de commande 20, et une zone sécable 23.

D'une manière générale, les dispositions sont identiques pour l'une et l'autre de ces deux pattes de serrage 13, et elles ne seront donc décrites ci-après que pour l'une de celles-ci.

Dans la forme de réalisation représentée, une telle patte de serrage 13 comporte, globalement, d'une part, une douille 25, dont la surface interne 26 est taraudée, pour coopération en vissage avec le fût 21 de la vis de commande 20 associée, et, d'autre part, au débouché supérieur de cette douille 25, une platine 27, qui s'étend en console, suivant une largeur largement supérieure au diamètre extérieur de la douille 25, et qui présente, transversalement, en saillie, sur une partie au moins de sa largeur, et, en pratique, sur la totalité de celle-ci, au moins une dent 28.

Par exemple, et tel que représenté, trois dents 28, de profil transversal triangulaire, sont prévues, parallèlement les unes des autres, à distance de la douille 25, et, en pratique, à l'extrémité libre de la platine 27.

Dans la forme de réalisation représentée, la platine 27 est raidie, d'une part, par deux bords tombés latéraux 29, qui, chacun respectivement, forment, au moins pour partie, les faces latérales 30 de la patte de serrage 13, et, d'autre part, par un bord tombé avant 31, qui forme la face frontale 32 de celle-ci.

Dans la forme de réalisation représentée, les bords tombés latéraux 29 comportent, chacun, suivant un dièdre saillant, un pan arrière 33, qui intervient pour l'essentiel au droit de la douille 25, et dont le contour, en élévation, est globalement rectangulaire, et un pan avant 34, qui intervient, pour l'essentiel, au droit des dents 28, et dont le contour, en élévation, est globalement trapézoïdal.

De l'un à l'autre des deux bords tombés latéraux 29, les pans arrière 33 sont parallèles l'un à l'autre, tandis que les pans avant 34 convergent légèrement l'un vers l'autre.

A leur extrémité avant, ces pans avant 34 des bords tombés latéraux 29 sont reliés l'un à l'autre par le bord tombé avant 31.

Dans la forme de réalisation représentée, la platine 27 ne s'étend que sur la partie avant de la douille 25, et les pans arrière 33 des bords tombés latéraux 29 se prolongent l'un et l'autre vers l'arrière, à distance de la douille 25, en sorte que, sur sa partie arrière, celle-ci se trouve encadrée par deux rainures 35.

Enfin, dans la forme de réalisation représentée, la douille 25, qui, par ailleurs, a un contour circulaire, se trouve tronquée par un méplat 36 à l'arrière, c'est-à-dire du côté diamétralement opposé à la platine 27, et, donc, du côté de la languette 15 associée.

Préférentiellement, et cela est le cas dans la forme de réalisation représentée, chacune des pattes de serrage 13 est, suivant des modalités décrites plus en détail ultérieurement, d'un seul tenant avec la languette 15 qui la porte, et, conjointement, et suivant des modalités également décrites plus en détail ultérieurement, cette languette 15 est elle-même d'un seul tenant avec la paroi latérale 11 de la boîte d'encastrement 10, l'ensemble formant de moulage une seule et même pièce.

Préférentiellement, également, la languette 15 est sensiblement rigide.

Dans la forme de réalisation représentée, sa rigidité tient au moins pour partie à son profil.

En effet, dans cette forme de réalisation, la languette 15 a, en section transversale, un profil globalement hémicirculaire.

Cependant, dans la forme de réalisation représentée, son fond 38 est plat, à l'image du méplat 36 de la douille 25 associée.

Quoi qu'il en soit, la concavité de cette languette 15 est tournée vers l'extérieur et la distance D3 séparant l'une de l'autre ses ailes 39 est sensiblement égale à celle séparant l'une de l'autre les rainures 35 qui encadrent la douille 25 associée, figure 10.

Dans la forme de réalisation représentée, la zone sécable 23 reliant d'un seul tenant une patte de serrage 13 à la languette 15 qui la porte forme aussi une zone d'articulation pour cette patte de serrage 13.

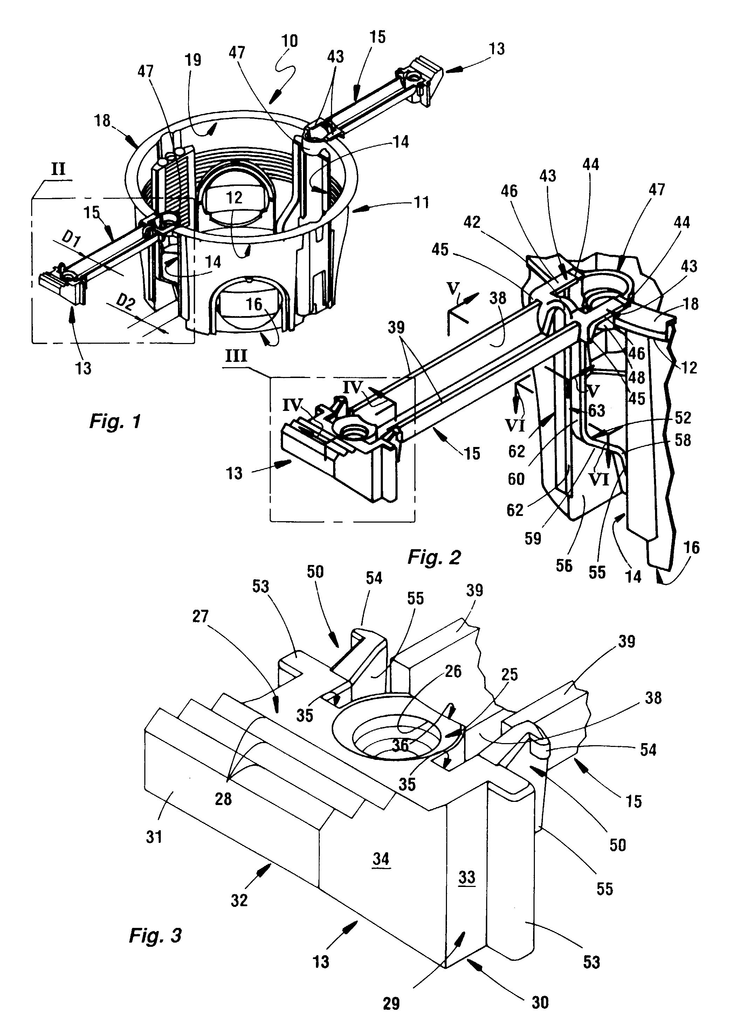

Par exemple, et tel que représenté, cette zone sécable 23 est constituée par un voile de longueur suffisante pour que la patte de serrage 13 puisse basculer de 90° par rapport à la languette 15 entre sa configuration de moulage, figures 1 à 4, et sa configuration de service, figures 7A et 7B.

Corollairement, ce voile est d'épaisseur relativement faible, pour pouvoir aisément se rompre.

Dans la forme de réalisation représentée, la zone sécable 23 intervient entre la douille 25 de la patte de serrage 13 et le fond 38 de la languette 15, et, plus précisément, entre le méplat 36 de cette douille 25 et ce fond 38.

Plus précisément, encore, dans cette forme de réalisation, cette zone sécable 23 s'étend sensiblement à mi-hauteur de la douille 25 de la patte de serrage 13, à niveau avec la surface interne du fond 38 de la languette 15.

Le voile qui la constitue s'étend sur tout ou partie de la largeur du fond 38 de la languette 15.

Dans la forme de réalisation représentée, la languette 15 comporte, transversalement, à son autre extrémité, c'est-à-dire à son extrémité opposée à la patte de serrage 13, et, donc, à distance de cette patte de serrage 13, une arche 42.

En pratique, cette arche 42 s'étend de l'une à l'autre des ailes 39 de la languette 15, entre celles-ci.

Ainsi qu'il est aisé de le comprendre, cette arche 42 est destinée à raidir transversalement la languette 15 à son extrémité opposée à la patte de serrage 13, tout en permettant le passage du fût 21 de la vis de commande 20 correspondante.

A cette même extrémité, c'est-à-dire du côté opposé à la patte de serrage 13, la languette 15 comporte, par ailleurs, longitudinalement, deux doigts 43, par chacun desquels elle est reliée, d'un seul tenant, par une zone charnière 44, à la paroi latérale 11, et, plus précisément, à la collerette 18 formant l'épaulement 12 de cette paroi latérale 11, du côté de la surface supérieure de cette collerette 18.

Par exemple, et tel que représenté, les doigts 43 s'enracinent chacun respectivement sur les ailes 39 de la languette 15, au droit de l'arche 42, et en continuité avec celle-ci.

Plus précisément, dans la forme de réalisation représentée, chacun de ces doigts 43 présente, en équerre l'un par rapport à l'autre, deux tronçons, à savoir un tronçon transversal 45, par lequel il s'enracine à l'aile 39 correspondante de la languette 15, à l'extérieur de cette aile 39, et un tronçon longitudinal 46, qui s'étend sensiblement en continuité avec la tranche de cette aile 39, et par lequel il est relié, par la zone charnière 44 correspondante, à la paroi latérale 11 de la boîte d'encastrement 10.

En pratique, la zone charnière 44 de chacun des doigts 43 est formée par une zone de moindre épaisseur.

En pratique, également, la collerette 18 formant l'épaulement 12 de la paroi latérale 11 est interrompue, localement, au droit de chacun des évidements 14 de cette paroi latérale 11, mais, à son niveau, les deux lèvres d'un tel évidement 14 sont reliées l'une à l'autre par un pontet 47, qui, suivant un contour globalement hémicirculaire, fait saillie vers l'intérieur de la boîte d'encastrement 10, avec, à la base de ce pontet 47, à l'intérieur de celui-ci, pour l'appui de la tête 22 de la vis de commande 20 correspondante, un anneau 48, figure 2.

Dans la forme de réalisation représentée, chacune des pattes de serrage 13 comporte, par ailleurs, latéralement, sur l'une au moins de ses faces latérales 30, des moyens de rainure 50 par lesquels, en configuration de service, et tel que représenté par exemple sur les figures 8 et 10, elle est en prise avec une lèvre de guidage 52 bordant localement l'évidement 14 correspondant de la paroi latérale 11.

Par exemple, et tel que représenté, la patte de serrage 13 comporte des moyens de rainure 50 sur chacune de ses faces latérales 30, et, en correspondance, l'évidement 14 de la paroi latérale 11 a une lèvre de guidage 52 le long de chacun de ses bords.

Les moyens de rainure 50 que comporte la patte de serrage 13 sur chacune de ses faces latérales 30 sont formés entre une nervure avant 53 et un ergot arrière 54.

La nervure avant 53 fait saillie vers l'extérieur sur le pan arrière 33 du bord tombé latéral 29 concerné, en s'étendant en pratique le long du bord arrière de ce pan arrière 33, sur toute la hauteur de celui-ci.

L'ergot arrière 54 fait saillie vers l'extérieur, à distance de la nervure avant 53, sur un flasque 55 qui prolonge vers l'arrière le pan arrière 33 du bord tombé latéral 29 concerné.

En pratique, de hauteur moindre que celle de la nervure avant 53, cet ergot arrière 54 n'intervient que ponctuellement, à niveau avec la platine 27.

Pour minimiser son impact dans le volume intérieur de la boîte d'encastrement 10, il est par ailleurs abattu par un chanfrein du côté de celui-ci.

Corollairement, le long de chacun des bords de chacun des évidements 14 de la paroi latérale 11, la lèvre de guidage 52 fait saillie sur un flasque 56 qui fait lui-même saillie radialement vers l'intérieur dans la boîte d'encastrement 10, au raccordement entre la paroi latérale 11 de celle-ci et son fond 16.

En pratique, dans la forme de réalisation représentée, cette lèvre de guidage 52 s'étend d'une première extrémité, éloignée de l'épaulement 12 de la paroi latérale 11, pour laquelle, sensiblement à niveau avec le fond 16, elle est décalée vers l'intérieur par rapport à cette paroi latérale 11, à une deuxième extrémité, rapprochée de l'épaulement 12, pour laquelle, sensiblement à niveau avec la collerette 18 formant l'épaulement 12, elle est à proximité immédiate de cette paroi latérale 11.

D'une de ses extrémités à l'autre, cette lèvre de guidage 52 s'étend en bordure du flasque 56 qui la porte, et elle présente, successivement, à compter du fond 16, figure 2, un premier tronçon 58, qui s'étend en oblique par rapport à la paroi latérale 11, en se rapprochant progressivement de celle-ci suivant un angle relativement faible, un deuxième tronçon 59, qui s'étend également en oblique par rapport à la paroi latérale 11, en se rapprochant progressivement de celle-ci, mais suivant un angle supérieur au précédent, et un troisième tronçon 60, qui, lui, est sensiblement parallèle à la paroi latérale 11 et s'étend sensiblement parallèlement à une génératrice de celle-ci.

Dans la forme de réalisation représentée, enfin, une lèvre de butée 62 borde également chacun des évidements 14 de la paroi latérale 11, sensiblement parallèlement à une génératrice de celle-ci, le long de chacun des bords d'un tel évidement 14.

En pratique, cette lèvre de butée 62 est légèrement décalée vers l'extérieur par rapport à la paroi latérale 11, et elle fait donc saillie sur celle-ci.

Elle s'étend sur la quasi totalité de la hauteur de la paroi latérale 11 à compter de la collerette 18, en s'arrêtant cependant à distance du fond 16.

Parallèle au troisième tronçon 60 de la lèvre de guidage 52, cette lèvre de butée 62 forme donc, avec celle-ci, sur une partie de la hauteur de la paroi latérale 11 à compter de la collerette 18, des moyens de rainure 63.

Pour la configuration de moulage de la boîte d'encastrement 10 suivant l'invention, et tel que représenté sur les figures 1 à 4, les languettes 15 s'étendent à l'horizontale, parallèlement au fond 16 de cette boîte d'encastrement 10, et, conjointement, les pattes de serrage 13 ont une orientation pour laquelle leur douille 25 s'étend, elle, perpendiculairement à ce fond 16.

Au montage, et tel que schématisé par une flèche F1 pour l'une d'elles sur la figure 7A, chacune des pattes de serrage 13 est, dans un premier temps, rabattue sur la languette 15 qui la porte, par un pliage de 90° de la zone sécable 23 qui la relie à celle-ci, et, par les rainures 35 qui encadrent sa douille 25, elle s'engage alors sur les ailes 39 de cette languette 15.

Dans un deuxième temps, et tel que schématisé par une flèche F2 pour l'une d'elles sur la figure 7B, chacune des languettes 15 est elle-même rabattue vers l'intérieur de la boîte d'encastrement 10, par un pliage de ses zones charnières 44 proche de 270°, ce rabattement étant poursuivi jusqu'à ce que, tel que représenté sur les figures 7B et 8, la patte de serrage 13 qu'elle porte s'engage par ses moyens de rainure 50 sur les lèvres de guidage 52 bordant l'évidement 14 correspondant de la paroi latérale 11.

Pour la configuration de service qui est alors la leur, les pattes de serrage 13 se trouvent alors chacune sensiblement à niveau avec le fond 16 de la boîte d'encastrement 10, et, par construction, il est fait en sorte que, dûment maintenues par les lèvres de guidage 52 correspondantes, elles soient totalement, ou quasi totalement, escamotées dans le volume intérieur de cette boîte d'encastrement 10, en raison du décalage vers l'intérieur de l'extrémité concernée de ces lèvres de guidage 52.

Dans un troisième temps, et tel que schématisé par une flèche F3 pour l'une d'elles sur la figure 7B, les vis de commande 20 sont mises en place, à travers, successivement, l'anneau 48 des évidements 14 de la paroi latérale 11 et l'arche 42 des languettes 15, jusqu'à venir en prise, par leur fût 21, avec la douille 25 des pattes de serrage 13.

La boîte d'encastrement 10 suivant l'invention est alors prête à l'emploi.

Après sa mise en place, c'est-à-dire après son engagement dans une ouverture appropriée de la paroi, non représentée, à équiper, il suffit d'agir en vissage sur les vis de commande 20 de ses pattes de serrage 13.

En effet, bloquées en rotation par les bords des évidements 14 de la paroi latérale 11 dans lesquels elles interviennent, ces pattes de serrage 13 sont alors sollicitées en déplacement en direction de l'épaulement 12 de cette paroi latérale 11, tel que schématisé par une flèche F4 pour l'une d'elles sur la figure 9.

Dans un premier temps, l'effort correspondant conduit la zone sécable 23 qui les relie aux languettes 15 à se rompre.

Dans un deuxième temps, cet effort provoque leur déplacement en direction de l'épaulement 12 de la paroi latérale 11.

Ce faisant, et eu égard au profil des lèvres de guidage 52 avec lesquelles elles sont en prise, les pattes de serrage 13 font progressivement saillie vers l'extérieur, hors de la boîte d'encastrement 10, jusqu'à connaître un trajet rectiligne en approchant de l'épaulement 12 de la paroi latérale 11, ce qui permet, comme recherché, leur coopération en serrage avec cet épaulement 12.

Ainsi qu'il est aisé de le comprendre, les lèvres de guidage 52 assurent avantageusement un guidage positif des pattes de serrage 13 dans les deux sens, tout au long du parcours de ces pattes de serrage 13.

Ainsi qu'il est également aisé de le comprendre, les lèvres de butée 62 contribuent avantageusement à leur blocage en rotation sur la partie terminale de ce parcours, et, notamment, lors du serrage de la paroi à équiper.

Ainsi qu'on le notera, enfin, dès que le parcours des pattes de serrage 13 est devenu rectiligne, et cela est donc le cas dès la phase terminale de serrage de ce parcours, les languettes 15 occultent alors avantageusement au mieux les évidements 14 de la paroi latérale 11, en contournant le fût 21 des vis de commande 20.

Du fait que leur fond 38 est plat, ce qui est autorisé par le méplat 36 des douilles 25 associées, l'impact des languettes 15 sur le volume intérieur de la boîte d'encastrement 10 est, par ailleurs, avantageusement minimisé.

Bien entendu, la boîte d'encastrement 10 suivant l'invention est par ailleurs équipée de moyens propres à permettre d'y rapporter un quelconque mécanisme.

Les dispositions correspondantes ne relevant pas de la présente invention, elles ne seront pas décrites ici.

La présente invention n'est d'ailleurs pas limitée à la forme de réalisation décrite et représentée, mais englobe toute variante d'exécution.

## Revendications

1. Boîte d'encastrement du genre comportant, d'une part, une paroi latérale (11), qui présente, transversalement, en saillie vers l'extérieur, sur une partie au moins de son pourtour, un épaulement (12), et, d'autre part, au moins une patte de serrage (13), qui, disposée au droit d'un évidement (14) de la paroi latérale (11) allongé suivant une génératrice de celle-ci, est portée par une languette (15) et est susceptible d'être commandée en déplacement en direction de l'épaulement (12) de cette paroi latérale (11), pour coopération en serrage avec celui-ci, caractérisée, conjointement, en ce que, d'une part, la patte de serrage (13), qui est en prise avec une vis de commande (20) propre à sa commande en déplacement, est reliée par une zone sécable (23) à la languette (15) qui la porte, et en ce que, d'autre part, la dimension transversale (D1) de cette languette (15) est sensiblement de l'ordre de celle (D2) de l'évidement (14) correspondant de la paroi latérale (11), pour une occultation au moins partielle de cet évidement (14).

2. Boîte d'encastrement suivant la revendication 1, caractérisée en ce que la zone sécable (23) reliant la patte de serrage (13) à la languette (15) qui la porte forme aussi une zone d'articulation pour cette patte de serrage (13).

3. Boîte d'encastrement suivant l'une quelconque des revendications 1, 2, caractérisée en ce que la languette (15) portant la patte de serrage (13) est sensiblement rigide.

4. Boîte d'encastrement suivant l'une quelconque des revendications 1 à 3, caractérisée en ce que la languette (15) portant la patte de serrage (13) a, en section transversale, un profil globalement hémicirculaire, et sa concavité est tournée vers l'extérieur.

5. Boîte d'encastrement suivant l'une quelconque des revendications 1 à 4, caractérisée en ce que la languette (15) portant la patte de serrage (13) comporte, transversalement, à distance de cette patte de serrage (13), une arche (42).

6. Boîte d'encastrement suivant l'une quelconque des revendications 1 à 5, caractérisée en ce que la patte de serrage (13) est d'un seul tenant avec la languette (15) qui la porte.

7. Boîte d'encastrement suivant l'une quelconque des revendications 1 à 6, caractérisée en ce que la languette (15) portant la patte de serrage (13) est d'un seul tenant avec la paroi latérale (11).

8. Boîte d'encastrement suivant la revendication 7, caractérisée en ce que la languette (15) comporte deux doigts (43) par chacun desquels elle est reliée, d'un seul tenant, par une zone charnière (44), à la paroi latérale (11).

9. Boîte d'encastrement suivant l'une quelconque des revendications 1 à 7, caractérisée en ce que la patte de serrage (13) comporte, latéralement, sur l'une au moins de ses faces latérales (30), des moyens de rainure (50) par lesquels elle est en prise avec une lèvre de guidage (52) bordant l'évidement (14) de la paroi latérale (11).

10. Boîte d'encastrement suivant la revendication 9, caractérisée en ce que les moyens de rainure (50) que comporte la patte de serrage (13) sont formés entre une nervure avant (53) et un ergot arrière (54).

11. Boîte d'encastrement suivant l'une quelconque des revendications 9, 10, caractérisée en ce que la lèvre de guidage (52) s'étend d'une première extrémité, éloignée de l'épaulement (12) de la paroi latérale (11), pour laquelle elle est décalée vers l'intérieur par rapport à cette paroi latérale (11), à une deuxième extrémité, rapprochée de cet épaulement (12), pour laquelle elle est à proximité immédiate de la paroi latérale (11).

12. Boîte d'encastrement suivant l'une quelconque des revendications 9 à 11, caractérisée en ce qu'une lèvre de butée (62) borde également l'évidement (14) de la paroi latérale (11), sensiblement parallèlement à une génératrice de celle-ci.

13. Boîte d'encastrement suivant l'une quelconque des revendications 9 à 12, caractérisée en ce que la patte de serrage (13) comporte des moyens de rainure (50) sur chacune de ses faces latérales (30).

14. Boîte d'encastrement suivant l'une quelconque des revendications 1 à 12, caractérisée en ce que deux pattes de serrage (13) sont prévues en positions diamétralement opposées l'une par rapport à l'autre.
